# EUROPEAN PATENT SPECIFICATION

(11) **EP 2 292 941 B1**
(45) Date of publication and mention of the grant of the patent: **13.08.2014**
(21) Application number: 10009302.0
(22) Date of filing: 07.09.2010
(51) Int. Cl.: F16C 11/06

(54) **Assembly including a ball-joint dust cover**
Anordnung beinhaltend eine Kugelgelenkstaubabdeckung
Ensemble comprenant un capuchon protecteur pour articulation sphérique

(30) Priority: 08.09.2009 JP 2009206568
(43) Date of publication of application: 09.03.2011
(73) Proprietor: Carl Freudenberg KG, 69469 Weinheim (DE)
(72) Inventor: Ito, Shin, Omaezaki-shi Shizuoka-ken (JP); Sato, Hiroyuki, kakegawa-shi Shizuoka-ken (JP)

(56) References cited:
- EP-A1- 1 630 431
- EP-A1- 1 865 212
- DE-U1- 9 419 741

## Description

### BACKGROUND OF THE INVENTION

### Field of the Invention

The present invention relates to a ball-joint dust cover.

Further, the present invention relates to a ball-joint dust cover that is used in a suspension device, a steering device, and the like of a vehicle.

### Description of the Related Art

As a ball joint equipped with a dust cover used for dust protection and water proofing of a ball-joint connection portion, a ball-joint dust cover previously disclosed in Japanese Patent Application Laid-Open No. 2009-024834 is shown in Fig. 5.

The ball-joint dust cover has a seal structure in which a spherical head portion 200 formed at one end of a ball stud 100 is held inside a socket 300.

Then, a handle 400 at the other end of the ball stud 100 is clamped and fixed to a knuckle 500.

On the other hand, a one-end large diameter opening 800 of the rubberlike elastic dust cover 600 is fixed and held to the outer peripheral surface of the socket 300 by an annular pressing ring 700, and the other-end small diameter opening 150 is held by the handle 400.

The small diameter opening 150 of the existing dust cover 600 is provided with a dust lip 160 that is pressed by the lower surface of the knuckle 500 and suppresses dust from entering the dust cover 600.

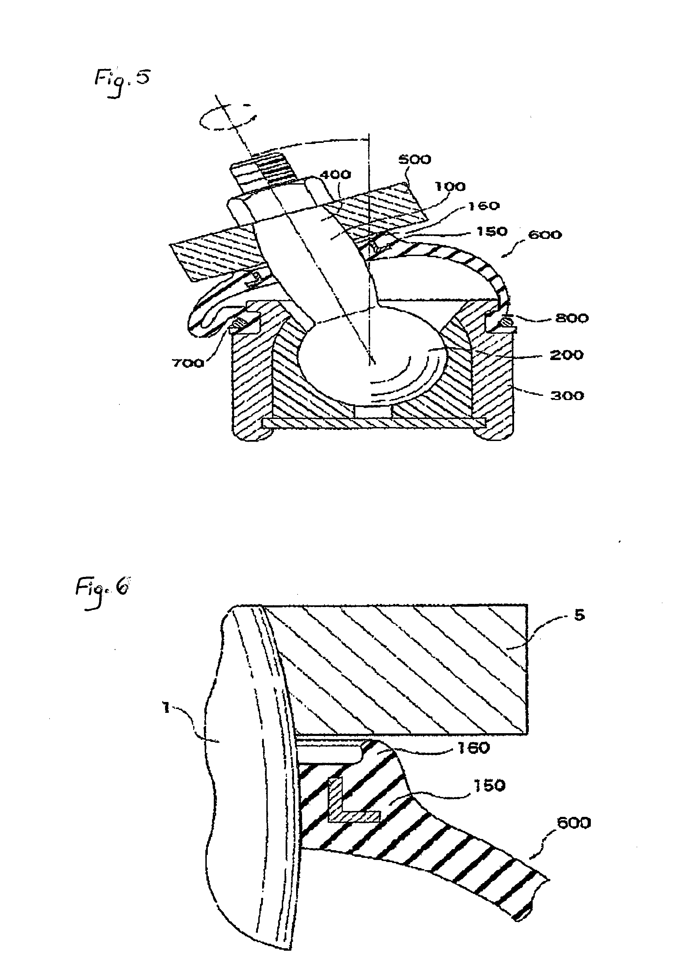

However, when an inclination angle of the ball stud 100 with respect to the socket 300 is large (when an oscillation angle is large), as shown in Fig. 6, there is a possibility that the small diameter opening 150 may slide on the handle 400 of the ball stud 100 toward the spherical head portion 200.

Then, there is a problem that the dust lip 160 is deformed toward the handle 400 (the inner side of the radial direction) of the ball stud 100 in accordance with the sliding movement of the small diameter opening 150.

As a result, there are problems that the function of the dust lip 160 is damaged and dust enters the dust cover 600.

Therefore, Domestic Re-publication of PCT International Application WO2006/098124 proposes a technique for allowing the dust lip to come into contact with an inclination surface provided in the corner of the lower surface of the knuckle. However, it is not possible to sufficiently solve the problem that the function of the dust lip is degraded when the small diameter opening slides on the handle of the ball stud toward the spherical head portion.

The invention relates to an assembly, including a ball-joint dust cover formed of a rubberlike elastic material, wherein a spherical head portion formed at one end of a ball stud of the assembly is held inside a socket of the assembly, a handle at the other end of the ball stud is clamped and fixed to a knuckle of the assembly, a one-end large diameter opening of the ball-joint dust cover is fixed and held to the outer peripheral surface of the socket by an annular pressing ring, and the other-end small diameter opening of the ball-joint dust cover is held to the handle, wherein the outer peripheral surface of the knuckle is provided with an annular step portion, and wherein the small diameter opening of the ball joint dust cover includes a dust lip wherein the dust lip comes into sealing contact with a circumferential surface of the annular step portion.

Such an assembly is disclosed in the documents EP 1 630 431 A1, DE 94 19 741 U and EP 1 865 212 A1.

### SUMMARY OF THE INVENTION

The present invention is contrived in consideration of such problems, and an object of the invention is to provide a ball-joint dust cover capable of being used for a long period of time without the function of a dust lip provided in a small diameter opening of a dust cover being degraded even when an inclination angle of a ball stud with respect to a socket is large (when a oscillation angle is large). According to an aspect of the invention, there is provided an assembly, including a ball-joint dust cover formed of a rubberlike elastic material, wherein a spherical head portion formed at one end of a ball stud of the assembly is held inside a socket of the assembly, a handle at the other end of the ball stud is clamped and fixed to a knuckle of the assembly, a one-end large diameter opening of the ball-joint dust cover is fixed and held to the outer peripheral surface of the socket by an annular pressing ring, and the other-end small diameter opening of the ball-joint dust cover is held to the handle, wherein the outer peripheral surface of the knuckle is provided with an annular step portion, and wherein the small diameter opening of the ball joint dust cover includes a dust lip wherein the dust lip comes into sealing contact with a circumferential surface of the annular step portion characterized in that an angle α formed between the circumferential surface of the knuckle and its lower surface facing the spherical head portion and the socket is an acute angle that is less than 90°.

The invention obtains the effects as below.

According to the ball-joint dust cover as claimed in a first aspect of the invention, even when an inclination angle of the ball stud with respect to the socket is large (when a oscillation angle is large), the function of the dust lip provided in the small diameter opening of the dust cover is not degraded.

According to the ball-joint dust cover as claimed in a second aspect of the invention, since a force whereby the small diameter opening of the dust cover slides on the handle of the ball stud toward the spherical head portion acts as a force of pressing the dust lip against the circumferential surface of the annular step portion, the function of the dust lip is not degraded.

According to the ball-joint dust cover as claimed in a third aspect of the invention, since a force whereby the small diameter opening of the dust cover slides on the handle of the ball stud toward the spherical head portion acts as a force of pressing the dust lip against the circumferential surface of the annular step portion, the function of the dust lip is not degraded. Also, since a sufficient sealing pressing force (interference) is applied to the front end of the dust lip in accordance with an increase in the diameter of the front end of the dust lip, it is possible to more satisfactorily exhibit the sealing function of the dust lip.

According to the ball-joint dust cover as claimed in a fourth aspect of the invention, since a force whereby the small diameter opening of the dust cover slides on the handle of the ball stud toward the spherical head portion acts as a force of pressing the dust lip against the circumferential surface of the annular step portion, the function of the dust lip is not degraded. Also, since a sufficient sealing pressing force (interference) is applied to the front end of the dust lip in accordance with an increase in the diameter of the front end of the dust lip, it is possible to more satisfactorily exhibit the sealing function of the dust lip as well as to apply a uniform sealing pressing force (interference) to the entire dust lip.

According to the ball-joint dust cover as claimed in a fifth aspect of the invention, since it is possible to effectively prevent dust which falls along the outer peripheral surface of the knuckle from entering the contact surface between the front end of the dust lip and the circumferential surface of the annular step portion, it is possible to maintain the satisfactory sealing function of the dust lip for a long period of time.

### BRIEF DESCRIPTION OF THE DRAWINGS

Fig. 1 is a longitudinal sectional view illustrating a ball-joint dust cover according to the invention.
Fig. 2 is an enlarged view illustrating a main part of Fig. 1.
Fig. 3 is a diagram illustrating a second embodiment in the same manner as Fig. 2.
Fig. 4 is a diagram illustrating a third embodiment in the same manner as Fig. 2.
Fig. 5 is a longitudinal sectional view illustrating a ball-joint dust cover according to the related art.
Fig. 6 is a partially enlarged view illustrating a state in which a defect has occurred in Fig. 5.

### DESCRIPTION OF THE PREFERRED EMBODIMENTS

Hereinafter, the preferred embodiments of the invention will be described.

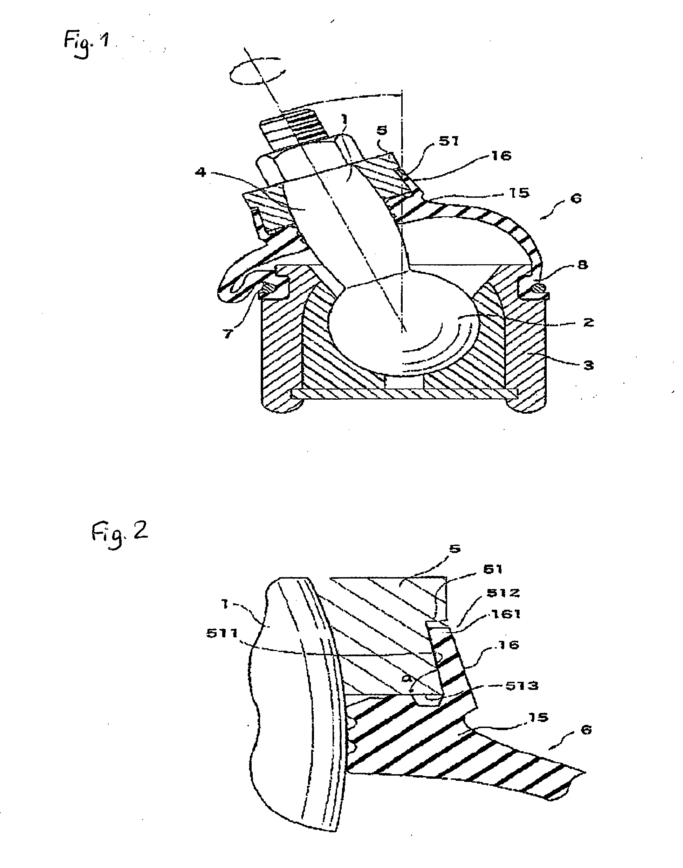

As shown in Figs. 1 and 2, a ball-joint dust cover according to the first embodiment of the invention has a configuration in which a spherical head portion 2 formed at one end of a ball stud 1 is held inside a socket 3, a handle 4 at the other end of the ball stud 1 is clamped and fixed to a knuckle 5, a one-end large diameter opening 8 of a dust cover 6 is fixed and held to the outer peripheral surface of the socket 3 by an annular pressing ring 7, and the other-end small diameter opening 15 of the dust cover 6 is held to the handle 4.

The outer peripheral surface of the knuckle 5 is provided with an annular step portion 51, and the small diameter opening 15 of the dust cover 6 includes a dust lip 16 which comes into sealing contact with a circumferential surface 511 of the annular step portion 51.

The circumferential surface 511 is formed in a conical shape which converges toward the end surface 512 of the annular step portion 51.

That is, an angle α formed between the circumferential surface 511 and the lower surface 513 of the knuckle 5 is an acute angle that is less than 90°.

For this reason, a force whereby the small diameter opening 15 of the dust cover 6 slides on the handle 4 of the ball stud 1 toward the spherical head portion 2 acts as a force of pressing the dust lip 16 against the circumferential surface 511 of the annular step portion 51, thereby further increasing a sealing pressing force of the dust lip 16 with respect to the circumferential surface 511.

Accordingly, even when the small diameter opening 15 of the dust cover 6 slides on the handle 4 of the ball stud 1 toward the spherical head portion 2, the sealing function of the dust lip 16 is not degraded.

Further, the end surface 512 of the annular step portion 51 has a width (a radial length) that completely covers a front end 161 of the dust lip 16.

For this reason, it is possible to effectively suppress dust which falls along the outer peripheral surface of the knuckle 5 from entering the contact surface between the front end 161 of the dust lip 16 and the circumferential surface 511 of the annular step portion 51.

That is, dust which falls along the outer peripheral surface of the knuckle 5 moves toward the outer peripheral surface of the dust cover 6 along the outer peripheral surface of the dust lip 16 and is removed to the outside.

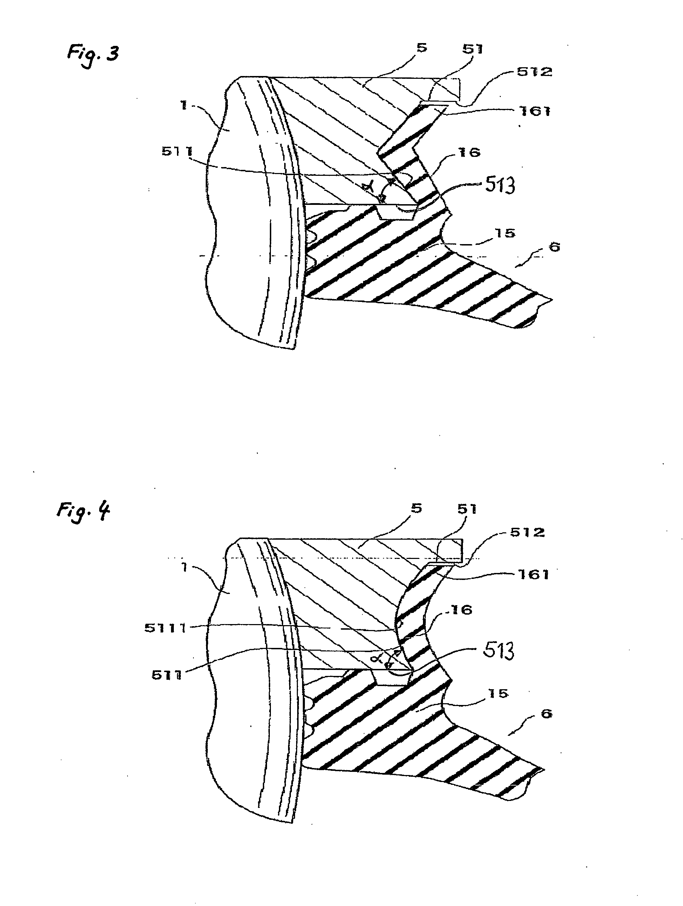

Next, the second embodiment of the invention will be described with reference to Fig. 3.

The difference from the first embodiment is that the circumferential surface 511 of the annular step portion 51 is formed in a two-stage conical shape.

That is, the circumferential surface 511 is formed in a two-stage conical shape which converges toward the end surface 512 of the annular step portion 51 and then diverges toward the end surface 512.

Accordingly, as described in the first embodiment, a force whereby the small diameter opening 15 of the dust cover 6 slides on the handle 4 of the ball stud 1 toward the spherical head portion 2 acts as a force of pressing the dust lip 16 against the circumferential surface 511 of the annular step portion 51, thereby further increasing a sealing pressing force of the dust lip 16 with respect to the circumferential surface 511. Even when the small diameter opening 15 of the dust cover 6 slides on the handle 4 of the ball stud 1 toward the spherical head portion 2, the sealing function of the dust lip 16 is maintained without being degraded, and a sufficient sealing pressing force (interference) is applied to the front end 161 of the dust lip 16 in accordance with an increase in the diameter of the front end 161 of the dust lip 16, thereby more satisfactorily exhibiting the sealing function of the dust lip.

Next, the third embodiment of the invention will be described with reference to Fig. 4.

The difference from the first embodiment is that the circumferential surface 511 of the annular step portion 51 is formed in a substantially circular-arc recess shape in a section.

That is, the circumferential surface 511 is formed in a circular-arc recess shape in which the diameter decreases toward the end surface 512 of the annular step portion 51 and then increases toward the end surface 512 after passing through a bottom portion 5111 having a minimum diameter.

Accordingly, as described in the first embodiment, a force whereby the small diameter opening 15 of the dust cover 6 slides on the handle 4 of the ball stud 1 toward the spherical head portion 2 acts as a force of pressing the dust lip 16 against the circumferential surface 511 of the annular step portion 51, thereby further increasing a sealing pressing force of the dust lip 16 with respect to the circumferential surface 511. Even when the small diameter opening 15 of the dust cover 6 slides on the handle 4 of the ball stud 1 toward the spherical head portion 2, the sealing function of the dust lip 16 is maintained without being degraded, and a sufficient sealing pressing force (interference) is applied to the front end 161 of the dust lip 16 in accordance with an increase in the diameter of the front end 161 of the dust lip 16, thereby not only is the sealing function of the dust lip more satisfactorily exhibited, but also a uniform sealing pressing force (interference) is applied to the entire dust lip 16.

In addition, grease is enclosed inside the dust cover 6.

Further, the invention is not limited to the above-described embodiments, but may, of course, adopt various forms without departing from the concept of the invention.

The ball-joint dust cover of the invention may be used in the suspension device, the steering device, and the like of the vehicle.

### [Description of Reference Numerals]

- 1:: BALL STUD
- 2:: SPHERICAL HEAD PORTION
- 3:: SOCKET
- 4:: HANDLE
- 5:: KNUCKLE
- 6:: DUST COVER
- 7:: PRESSING RING
- 8:: LARGE DIAMETER OPENING
- 15:: SMALL DIAMETER OPENING
- 16:: DUST LIP
- 51:: ANNULAR STEP PORTION

## Claims

1. Assembly including a ball-joint dust cover (6) formed of a rubberlike elastic material, wherein a spherical head portion (2) formed at one end of a ball stud (1) of the assembly is held inside a socket (3) of the assembly, a handle (4) at the other end of the ball stud (1) is clamped and fixed to a knuckle (5) of the assembly, a one-end large diameter opening (8) of the ball-joint dust cover (6) is fixed and held to the outer peripheral surface of the socket (3) by an annular pressing ring (7), and the other-end small diameter opening (15) of the ball-joint dust cover (6) is held to the handle (4),
wherein the outer peripheral surface of the knuckle (5) is provided with an annular step portion (51), and
wherein the small diameter opening (15) of the ball joint dust cover (6) includes a dust lip (16) wherein the dust lip (16) comes into sealing contact with a circumferential surface (511) of the annular step portion (51) **characterized in that** an angle α formed between the circumferential surface (511) of the knuckle (5) and its lower surface (513) facing the spherical head portion (2) and the socket (3) is an acute angle that is less than 90°.

2. Assembly as claimed in claim 1, wherein the circumferential surface (511) is formed as a conical shape which converges to the end surface (512) of the annular step portion (51).

3. Assembly as claimed in claim 1,
wherein the circumferential surface (511) is formed in a two-stage axial V-shape which firstly converges to the end surface (512) of the annular step portion (51) and secondly diverges to the end surface (512).

4. Assembly as claimed in claim 1,
wherein the circumferential surface (511) is formed in a substantially circular-arc recess shape in a section.

5. Assembly as claimed in any one of claim 1 to 4,
wherein the end surface (512) of the annular step portion (51) has a width which completely covers a front end (161) of the dust lip (16).

## Patentansprüche

1. Anordnung, die eine Kugelgelenkstaubabdeckung (6), die aus einem gummiähnlichen elastischen Material gebildet ist, aufweist, wobei ein kugelförmiger Kopfabschnitt (2), der an einem Ende eines Kugelbolzens (1) der Anordnung gebildet ist, in einer Pfanne (3) der Anordnung gehalten ist, ein Griff (4) an dem anderen Ende des Kugelbolzens (1) an einem Kniehebel (5) der Anordnung festgeklemmt und befestigt ist, eine Öffnung (8) an dem einen Ende mit dem großen Durchmesser der Kugelgelenkstaubabdeckung (6) an der äußeren Randfläche der Pfanne (3) durch einen ringförmigen Druckring (7) befestigt ist und gehalten wird, und die Öffnung (15) an dem anderen Ende mit dem kleinen Durchmesser der Kugelgelenkabdeckung (6) an dem Griff (4) gehalten wird,
wobei die äußere Randfläche des Kniehebels (5) mit einem ringförmigen Stufenabschnitt (51) versehen ist und
wobei die Öffnung (15) mit dem kleinen Durchmesser der Kugelgelenkstaubabdeckung (6) eine Staublippe (16) aufweist, wobei die Staublippe (16) mit einer Umfangsfläche (511) des ringförmigen Stufenabschnitts (51) in einen abdichtenden Kontakt kommt, **dadurch gekennzeichnet, dass** ein Winkel α, der zwischen der Umfangsfläche (511) des Kniehebels (5) und seiner unteren Fläche (513), die dem kugelförmigen Kopfabschnitt (2) und der Pfanne (3) zugewandt ist, gebildet ist, ein spitzer Winkel ist, der kleiner als 90° ist.

2. Anordnung nach Anspruch 1, wobei die Umfangsfläche (511) mit einer kegelförmigen Form gebildet ist, die zu der Endfläche (512) des ringförmigen Stufenabschnitts (51) zusammenläuft.

3. Anordnung nach Anspruch 1,
wobei die Umfangsfläche (511) in einer zweistufigen axialen V-Form gebildet ist, die zunächst zu der Endfläche (512) des ringförmigen Stufenabschnitts (51) zusammenläuft und dann zu der Endfläche (512) auseinanderläuft.

4. Anordnung nach Anspruch 1,
wobei die Umfangsfläche (511) in einem Abschnitt in einer im Wesentlichen kreisbogenartigen Vertiefungsform gebildet ist.

5. Anordnung nach einem der Ansprüche 1 bis 4,
wobei die Stirnfläche (512) des ringförmigen Stufenabschnitts (51) eine Breite hat, die ein vorderes Ende (161) der Staublippe (16) vollständig abdeckt.

## Revendications

1. Ensemble comprenant un capuchon antipoussière (6) pour articulation sphérique formé d'un matériau élastique de type caoutchouc, une portion de tête sphérique (2) formée à une extrémité d'un goujon à rotule (1) de l'ensemble étant retenue à l'intérieur d'une cavité (3) de l'ensemble, une poignée (4) à l'autre extrémité du goujon à rotule (1) étant serrée et fixée à une articulation (5) de l'ensemble, une ouverture (8) de grand diamètre à une extrémité du capuchon antipoussière (6) pour articulation sphérique étant fixée et retenue à la surface périphérique externe de la cavité (3) par une bague de pressage annulaire (7), et l'ouverture (15) de petit diamètre à l'autre extrémité du capuchon antipoussière (6) pour articulation sphérique étant retenue à la poignée (4),
la surface périphérique externe de l'articulation (5) étant pourvue d'une portion étagée annulaire (51), et
l'ouverture (15) de petit diamètre du capuchon antipoussière (6) pour articulation sphérique comportant une lèvre antipoussière (16), la lèvre antipoussière (16) venant en contact étanche avec une surface circonférentielle (511) de la portion étagée annulaire (51), **caractérisé en ce qu'**un angle α formé entre la surface circonférentielle (511) de l'articulation (5) et sa surface inférieure (513) faisant face à la portion de tête sphérique (2) et à la cavité (3) est un angle aigu qui est inférieur à 90 degrés.

2. Ensemble selon la revendication 1, la surface circonférentielle (511) étant formée avec une forme conique qui converge vers la surface d'extrémité (512) de la portion étagée annulaire (51).

3. Ensemble selon la revendication 1,
la surface circonférentielle (511) étant formée avec une forme en V axiale à deux étages qui converge tout d'abord vers la surface d'extrémité (512) de la portion étagée annulaire (51) et qui diverge ensuite vers la surface d'extrémité (512).

4. Ensemble selon la revendication 1,
la surface circonférentielle (511) étant formée dans une section avec une forme en retrait substantiellement en arc de cercle.

5. Ensemble selon l'une quelconque des revendications 1 à 4,
la surface d'extrémité (512) de la portion étagée annulaire (51) ayant une largeur qui couvre complètement une extrémité avant (161) de la lèvre antipoussière (16).
